# EUROPÄISCHE PATENTSCHRIFT

(11) **EP 0 719 221 B1**
(45) Veröffentlichungstag und Bekanntmachung des Hinweises auf die Patenterteilung: **28.10.1998**
(21) Anmeldenummer: 95925770.0
(22) Anmeldetag: 27.06.1995
(51) Int. Cl.: B44C 1/17, B41M 3/12, C04B 41/45

(54) **VERFAHREN ZUR HERSTELLUNG KERAMISCHER ABZIEHBILDER IM OFFSETDRUCK**
PROCESS FOR MAKING CERAMIC TRANSFER IMAGES BY OFFSET PRINTING
PROCEDE DE REALISATION D'IMAGES DE DECALCOMANIE CERAMIQUES EN IMPRESSION OFFSET

(30) Priorität: 12.07.1994 DE 4424459
(43) Veröffentlichungstag der Anmeldung: 03.07.1996
(73) Patentinhaber: F. XAVER LEIPOLD GMBH & CO. KG, 90513 Zirndorf (DE)
(72) Erfinder: EPPICH, Alfred, D-90513 Zirndorf (DE); EPPICH, Wolfgang, D-90513 Zirndorf-Bronnamberg (DE); HOCHLEITNER, Heinz, D-90522 Oberasbach (DE)
(74) Vertreter: Kessel, Egbert, Dipl.-Ing.
(86) Internationale Anmeldenummer: EP9502494
(87) Internationale Veröffentlichungsnummer: WO9601745

(56) Entgegenhaltungen:
- EP-A- 0 539 924
- DE-A- 2 064 543
- DE-A- 3 638 170
- GB-A- 708 718
- US-A- 3 898 362
- DATABASE WPI Week 7451 Derwent Publications Ltd., London, GB; AN 74-87732v & JP,A,49 035 407 (NORITAKE CO ET AL) , 2.April 1974

## Beschreibung

Die Erfindung betrifft ein Verfahren zur Herstellung keramischer Abziehbilder im Offsetdruck, bei dem auf ein Trägerpapier zunächst ein aus vorgeschmolzenem Glas (Flußmittel) und Firnis bestehender Vordruck und anschließend ein oder mehrere Farbdrucke aufgebracht werden, wobei als Druckfarbe ein Gemisch aus Farbkörpern und Firnis verwendet wird.

Ein solches Verfahren ist aus der US-PS 5 132 165 bekannt. Dabei kommt dem Vordruck die Aufgabe zu, Verankerungsmöglichkeiten für die anschließenden Farbdrucke zu schaffen und deren Firnis teilweise zu absorbieren. Allerdings sind damit auch Nachteile verbunden.

Zunächst stellt der Vordruck einen Kosten verursachenden zusätzlichen Arbeitsgang dar. Weiter ergeben sich Mängel daraus, daß im Hinblick auf die Schaffung von Verankerungsmöglichkeiten verhältnismäßig grobkörniges Flußmittel zum Einsatz kommen muß, was einer guten Druckschärfe abträglich ist.

Die US-A-3898362 beschreibt ein Verfahren zur Herstellung Keramischer Abziehbilder im Offsetdruck, wonach zunächst eine Schicht färbender Anteile und anschließend eine Schicht aus feingemahlenem Glasfluß auf einen Träger aufgebracht werden.

Der Erfindung liegt die Aufgabe zugrunde, das bekannte Verfahren zu vereinfachen und eine bessere Bildqualität zu ermöglichen. Das wird erfindungsgemäß dadurch erreicht, daß unter Weglassung des Vordrucks der erste Farbdruck unmittelbar auf das Trägerpapier aufgebracht wird, wobei als Druckfarbe eine Anpastung aus Farbkörper, hochbenetzendem Firnis und fein aufgemahlenem Flußmittel oder fein aufgemahlener keramischer Farbe verwendet wird.

Die einen Verfahrensschritt sparende Weglassung des Vordrucks wird dadurch ermöglicht, daß die Formulierung Farbkörper + hochbenetzender Firnis + fein aufgemahlene(s) Flußmittel oder keramische Farbe ein sich selbst sowohl untereinander als auch mit dem Trägerpapier verankerndes System darstellt. Insbesondere die feine Aufmahlung des Flußmittels oder der keramischen Farbe schafft die Voraussetzung für den Druck sehr fein aufgelöster Bilder, die durchaus Fotoqualität besitzen.

In weiterer Ausgestaltung der Erfindung ist vorgesehen, daß als hochbenetzender Firnis ein mit Phenol modifiziertes Collophoniumharz verwendet wird, dem Additive in Form von hochsiedenden aromatenfreien Mineralölen oder hochviskosen Leinölen oder Holzöl sowie Sikkative in Form von Kobalt, Mangan und Blei verwendet werden. Ein solcher Firnis ist vorrangig für wasserloses Offsetdrucken (Toray-Verfahren) geeignet, läßt sich jedoch auch für wasserführendes Offsetdrucken verwenden, wobei dann über die Additive Einfluß auf die Zusammensetzung genommen wird.

Die Reproduktion in Fotoqualität wird durch ein weiteres erfindungsgemäßes Merkmal begünstigt, gemäß welchem Flußmittel und keramische Farben mit einer Korngröße < 3µm verwendet werden.

Als besonders günstig hat sich ein Mischungsverhältnis erwiesen, bei dem die Anpastung aus 50 - 54 Gew.-% keramischen Bestandteilen (Farbkörper + Flußmittel oder keramische Farbe) und 50 - 46 Gew.-% Firnis hergestellt wird.

Nachstehend wird ein bevorzugtes Beispiel des erfindungsgemäßen Verfahrens dargestellt.

Auf ein übliches Abziehbilderpapier wird eine Anpastung folgender Zusammensetzung aufgedruckt:
gelber Farbkörper (Cadmiumpigment) 27 Gew.-%
gelbe keramische Farbe auf Cadmiumbasis (mit Silikaten verschmolzene Farbe) 27 Gew.-%
Firnis in Form von mit Phenol modifizierten Collophoniumharz 36.7 Gew.-% aromatenfreies paraffinisches Mineralöl 9 Gew.-%
Sikkative 0.3 Gew.-%.

Auf diesen Dekordruck wird ein Flußmittelüberzug aufgedruckt, um die Farbkörper des Farbdrucks zu entwickeln, Glanz zu erzeugen und einen mechanischen Schutzfilm auszubilden. Dieser Schutzfilm besteht aus SiO₂ 50 Gew.-%, PbO 25 Gew.-%, B₂O₃ 10 Gew.-%, Na₂O 5 Gew.-%, Al₂O₃ 5 Gew.-% und CdO 4 Gew.-%.

## Patentansprüche

1. Verfahren zur Herstellung keramischer Abziehbilder im Offset-Naßdruckverfahren,
- bei dem der erste Farbdruck unmittelbar auf das Trägerpapier aufgebracht wird und
- die Druckfarbe eine Anpastung aus hochbenetzendem Firnis, Farbkörper und feingemahlenem Flußmittel oder keramischer Farbe ist.

2. Verfahren nach Anspruch 1, **dadurch gekennzeichnet,** daß als hochbenetzender Firnis ein mit Phenol modifiziertes Collophoniumharz verwendet wird, dem Additive in Form von hochsiedenden aromatenfreien Mineralölen oder hochviskosen Leinölen oder Holzöl sowie ferner Sikkative in Form von Kobalt, Hangan und Blei beigemischt werden.

3. Verfahren nach den Ansprüchen 1 und 2, **dadurch gekennzeichnet,** daß Flußmittel oder keramische Farben mit einer Korngröße < 3µm verwendet werden.

4. Verfahren nach den Ansprüchen 1 - 3, **dadurch gekennzeichnet,** daß die Anpastung aus 50 - 54 Gew.-% keramischen Bestandteilen (Farbkörper + Flußmittel oder keramische Farbe) und 50 - 46 Gew.-% Firnis hergestellt wird.

## Claims

1. A process for producing ceramic transfer pictures using offset wet printing,
- in which the first colour printing is applied directly to the body paper and
- the printing ink is a paste of highly-wetting varnish, colouring matter and finely ground fluxing material or ceramic ink.

2. A process in accordance with Claim 1, characterised in that a colophony resin modified with phenol is used as the highly-wetting varnish with which additives in the form of high-boiling mineral oils free from aromatic hydrocarbons or highly-viscous linseed oils or wood oil and furthermore driers in the form of cobalt, manganese and lead are admixed.

3. A process in accordance with Claims 1 and 2, characterised in that fluxing materials or ceramic inks with a particle size of < 3µm are used.

4. A process in accordance with Claims 1 - 3, characterised in that the paste is produced from 50 - 54 percentage by weight of ceramic constituents (colouring matter + fluxing material or ceramic ink) and 50 - 46 percentage by weight of varnish.

## Revendications

1. Procédé de réalisation d'images de décalcomanie céramiques dans le procédé d'impression à l'humide offset
- dans lequel on applique la première impression en couleurs directement sur le papier support et
- l'encre d'impression est une pâte constituée par un vernis à haut pouvoir mouillant, un corps colorant et un fondant finement broyé ou une encre céramique.

2. Procédé selon la revendication 1, caractérisé en ce que l'on utilise comme vernis à haut pouvoir mouillant une résine de colophane modifiée par du phénol à laquelle on mélange des additifs sous forme d'huiles minérales à haut point d'ébullition exempte de substances aromatiques ou des huiles de lin à haute viscosité ou de l'huile de bois et en outre des siccatifs sous forme de cobalt, de manganèse et de plomb.

3. Procédé selon les revendications 1 et 2, caractérisé en ce que l'on utilise des fondants ou des encres céramiques ayant une taille de grains < 3 µm.

4. Procédé selon les revendications 1 à 3 caractérisé en ce que l'on prépare la pâte à partir de 50-54 % en masse de constituants céramiques (corps colorant + fondant ou encre céramique) et 50-46% en masse de vernis.
